# EUROPÄISCHE PATENTSCHRIFT

(11) **EP 0 738 986 B1**
(45) Veröffentlichungstag und Bekanntmachung des Hinweises auf die Patenterteilung: **02.04.2003**
(21) Anmeldenummer: 96105765.0
(22) Anmeldetag: 12.04.1996
(51) Int. Cl.: G06K 17/00, G01N 35/04

(54) **Analysengerät mit fest angeordnetem Strichkode-Lesegerät**
Analyser with fixed bar code reader
Analyseur avec lecteur de code à barres fixe

(30) Priorität: 19.04.1995 CH 111995
(43) Veröffentlichungstag der Anmeldung: 23.10.1996
(73) Patentinhaber: F. HOFFMANN-LA ROCHE AG, 4070 Basel (CH)
(72) Erfinder: Bühler, Jürg, 6023 Rothenburg (CH); Müller, Siegfried, 6344 Meierskappel (CH)
(74) Vertreter: Ventocilla, Abraham

(56) Entgegenhaltungen:
- EP-A- 0 356 250
- WO-A-83/00393
- WO-A-94/19698
- DE-A- 4 142 701
- US-A- 3 233 804
- US-A- 4 877 134
- US-A- 4 920 255

## Beschreibung

Die Erfindung betrifft ein Analysengerät zur automatischen Durchführung von Analysen, bei dem die zu analysierenden flüssigen Proben und die erforderlichen Reagenzien in entsprechenden Gefässen gehalten werden.

Bei modernen Analysengeräten ist es erwünscht, die Probe- und Reagenzgefässe im verfügbaren Raum möglichst eng nebeneinander anzuordnen, um eine möglichst wirtschaftliche Nutzung des Analysengeräts zu ermöglichen. Bei bisher bekannten Analysengeräten kann dieses Ziel nur im begrenzten Umfang erzielt werden, weil zwischen den Reihen von Gefässen Raum für den Transport eines Strichkode-Lesegeräts vorhanden sein muss, das mit einer geeigneten Transportvorrichtung in der Nähe der einzelnen Gefässe zum Lesen der dort angebrachten Strichkode-Etiketten gebracht wird. Ausserdem erfordert den Transport des Strichkode-Lesegeräts eine geeignete Transportvorrichtung, welche die mechanische Komplexität des Analysengeräts erhöht.

Der Erfindung liegt daher die Aufgabe zugrunde, ein Analysengerät zur Verfügung zu stellen, bei dem im verfügbaren Raum eine grössere Anzahl von Gefässen angeordnet werden kann und bei dem die Strichkode-Etiketten mit einer erheblich vereinfachten Anordnung gelesen werden.

Erfindungsgemäss wird diese Aufgabe mit einem Analysengerät gelöst, das dadurch gekennzeichnet ist, dass es folgende Komponenten enthält:
a) wenigstens zwei Gefässhalter, die im Analysengerät parallel zueinander angeordnet werden, wobei in jedem Gefässhalter eine Vielzahl von Gefässen der gleichen Art (z.B. Proben enthaltenden Gefässe) angeordnet werden, wobei jeder Gefässhalter einen in einem Stück hergestellten länglichen Körper hat, der eine einzige geradlinige Reihe von identischen, länglichen Kammern zur Aufnahme von je einem Gefäss enthält, wobei alle Kammer einen gemeinsamen Boden haben, in Bezug auf den sie senkrecht angeordnet sind, wobei benachbarte Kammer voneinander durch eine Trennwand getrennt sind. wobei jede Kammer auf der Innenfläche einer Seitenwand eine erste Strichkode-Etikette trägt, die zur Erfassung des Fehlens eines Gefässes in der Kammer dient, wobei jede Kammer auf der Aussenfläche einer Seitenwand, eine zweite Strichkode-Etikette trägt, die zur Erfassung der Position der Kammer im Gefässhalter dient, und wobei die erste und die zweite Strichkode-Etikette von der selben Seite des Gefässhalters mit einem Strichkode-Lesegerät lesbar sind,
b) einen im Analysengerät fest angeordneten Strichkode-Lesegerät, das zum Lesen aller Strichkode-Etiketten auf jedem der Gefässhalter verwendet wird, und
c) Mittel zur automatischen Einstellung des Fokussierbereichs des Strichkode-Lesegeräts in Funktion des Abstands zwischen dem Gefässhalter und dem Strichkode-Lesegerät.

Der wesentliche Vorteil, der mit dem erfindungsgemässen Analysengerät erzielt wird, liegt darin, dass die Gefässe im Analysengerät sehr eng nebeneinander angeordnet werden können, weil für den Lesevorgang mit dem Strichkode-Lesegerät kein Zwischenraum zwischen den Gefässreihen erforderlich ist. Die Benutzung eines fest angeordneten Strichkode-Lesegeräts hat ausserdem den Vorteil, das keine Transporteinrichtung für dessen Transport notwendig ist.

Ein Ausführungsbeispiel der Erfindung wird im folgenden anhand der beiliegenden Zeichnungen beschrieben. Es zeigen:
- Fig.1: eine schematische Draufsicht der Anordnung von Gefässhaltern in einem erfindungsgemässen Analysengerät.
- Fig. 2: eine schematische Vorderansicht der Anordnung gemäss Fig. 1.
- Fig. 3: eine perspektivische Vorderansicht eines der in Fig. 1 dargestellten Gefässhalter 21-26.
- Fig. 4: eine Vorderansicht des Gefässhalters gemäss Fig. 3.
- Fig. 5: eine perspektivische Ansicht eines Gefässhalter gemäss Fig. 3, bei dem die Kammer 51-1 bis 51-15 je ein Probegefäss 11 enthalten.
- Fig. 6: Ansichten von Mustern der Strichkode-Etiketten 44, 45. 47 und 48.
- Fig. 7: eine perspektivische Ansicht einer Trägerplatte, auf der die Gefässhalter gemäss Fig. 1 angeordnet werden.
- Fig. 8 eine: perspektivische Ansicht der Trägerplatte 71 gemäss Fig. 7 und von einer Anordnung von Induktivsensoren und Hubmagneten, die unmittelbar unter dem vorderen Teil der Trägerplatte 71 angeordnet werden.
- Fig. 9: eine schematische Draufsicht einer Anordnung von Gefässhaltern unmittelbar vor der Einführung eines Gefässhalters in einen freien Platz.
- Fig. 10: eine schematische Draufsicht einer Anordnung von Gefässhaltern während der Einführung eines Gefässhalters in einen freien Platz.
- Fig. 11: eine perspektivische Schnittansicht eines Gefässhalters gemäss Fig. 3.
- Fig. 12: eine Draufsicht des Gefässhalters gemäss Fig. 3.
- Fig. 13: eine Unteransicht des Gefässhalters gemäss Fig. 3.
- Fig. 14: eine Seitenansicht von links des Gefässhalters gemäss Fig. 3.
- Fig. 15: eine Seitenansicht von rechts des Gefässhalters gemäss Fig. 3.
- Fig. 16: eine perspektivische Rückansicht eines der in Fig. 1 dargestellten Gefässhalter 21-26.

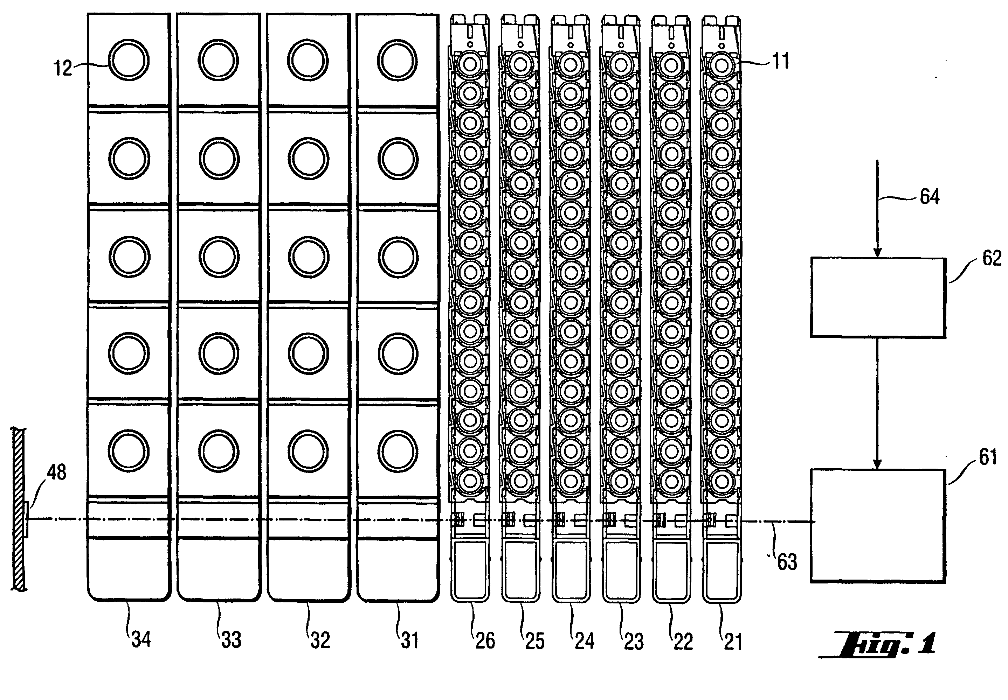

Fig. 1 zeigt eine Draufsicht eines erfindungsgemässen Analysengerätes zur automatischen Durchführung von Analysen von flüssigen Proben. Wie in Fig. 1 gezeigt, werden in einem erfindungsgemässen Analysengerät Gefässhalter 21 bis 26 für Probengefässe 11 und Gefässhalter 31 bis 34 für Reagenzgefässe 12 parallel nebeneinander angeordnet. In jedem der Gefässhalter wird eine Vielzahl von Gefässen der gleichen Art angeordnet, im Gefässhalter 21 werden z.B. Proben enthaltenden Gefässe 11 angeordnet.

Wie aus Fig. 1 ersichtlich, ist ein Strichkode-Lesegerät 61 im Analysengerät auf eine Seite der Anordnung von Gefässhaltern fest angeordnet. Mit dem Strichkode-Lesegerät 61 werden sämtliche Strichkode-Etiketten auf den Gefässhaltern 21 bis 26 , 31 bis 34 und auf den darin enthaltenen Gefässen gelesen, wobei der Lesevorgang jeweils während der Einführung eines Gefässhalters ins Analysengerät statt findet. Der Verlauf des zum Lesen der Strichkode-Etiketten verwendeten Lichtstrahl ist mit der gestrichelte Linie 63 angedeutet. Wenn dieser Lichtstrahl auf keine Etikette auf einem Gefässhalter oder Gefäss trifft, fällt er auf eine Etikette 48 auf, die auf einer festen Seitenwand des Analysengeräts angebracht ist, die sich ausserhalb der Anordnung von Gefässhaltern befindet. Die Etikette 48 wird zur Einstellung des Strichkode-Lesegeräts 61 gelesen.

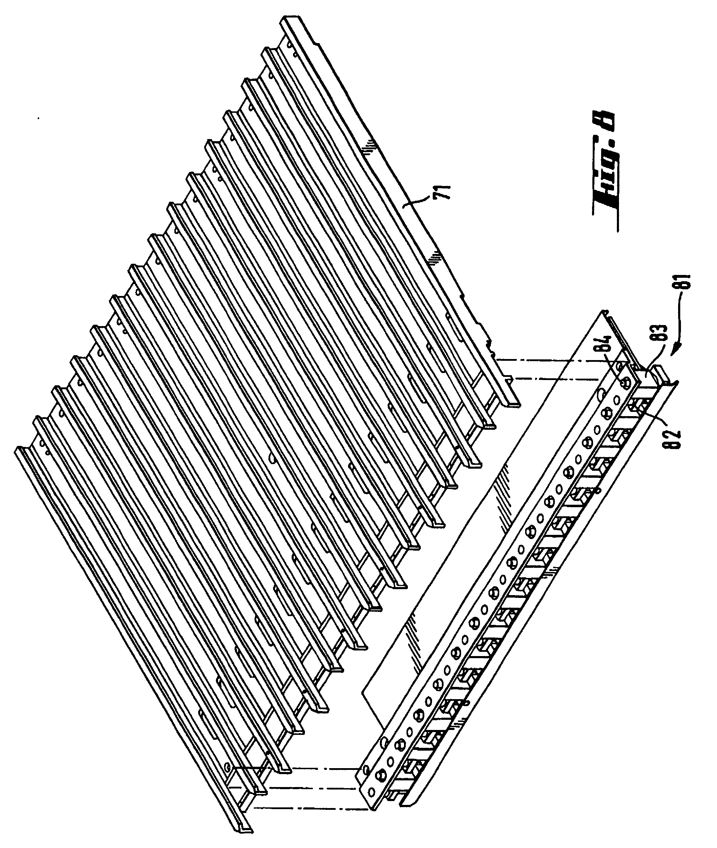

Das Analysengerät gemäss Fig.1 enthält ferner Mittel zur automatischen Einstellung des Fokussierbereichs des Strichkode-Lesegeräts in Funktion des Abstands zwischen dem Gefässhalter und dem Strichkode-Lesegerät. Dazu gehören in Fig. 8 dargestellte Mittel, welche die Position jedes Gefässhalters im Analysengerät erfassen und entsprechende elektronische Signale erzeugen und damit - wie in Fig. 1 dargestellt - über eine Leitung 64 und eine Steuerschaltung 62 eine geeignete Einstellung des Fokussierbereichs des Strichkode-Lesegeräts in Funktion des Abstands zwischen dem Gefässhalter und dem Strichkode-Lesegerät bewirken. Das Strichkode-Lesegerät kann auf diese Weise Strichkode-Etiketten korrekt lesen, die sich auf verschiedene Entfernungen des Strichkode-Lesegeräts befinden.

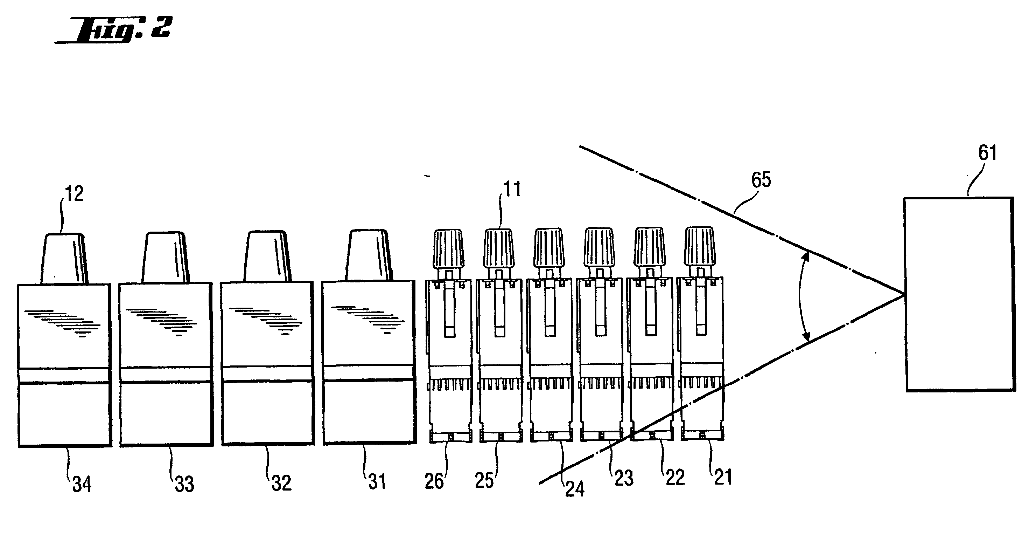

Fig. 2 zeigt schematisch die relative Anordnung der Gefässhalter 21 bis 26 und 31 bis 34 und des Strichkode-Lesegeräts 61 im Analysengerät gemäss Fig. 1. In Fig. 2 wird der vom Lesestrahls 63 beim Lesevorgang abgetastete Winkel 65 dargestellt.

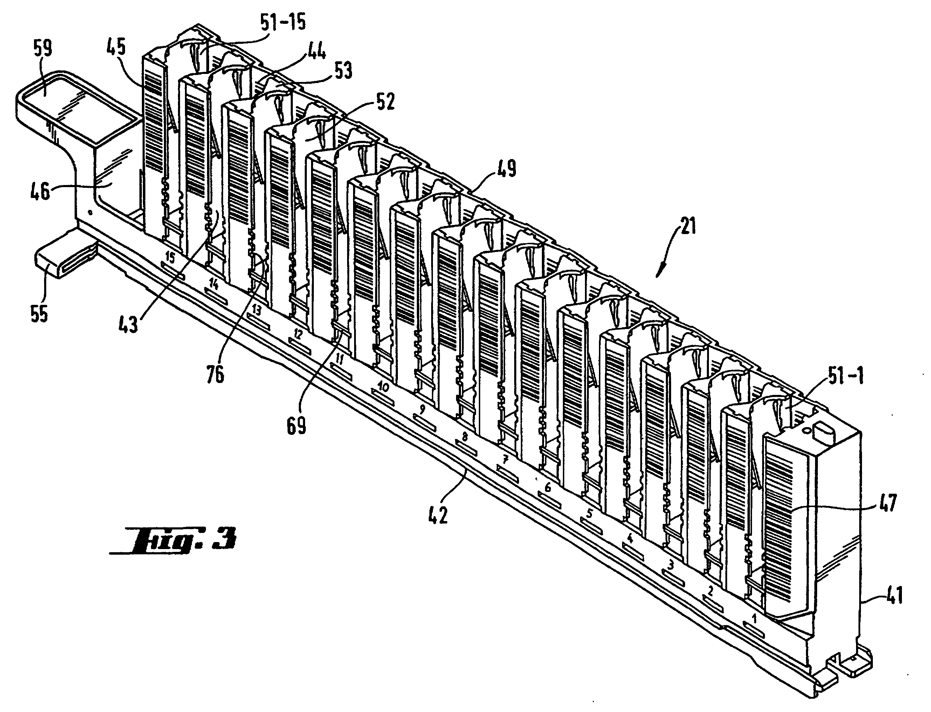

Fig. 3 zeigt eine perspektivische Ansicht eines der in Fig. 1 gezeigten Gefässhalter 21 bis 26 für Probengefässe 11, z.B. Gefässhalter 21. Der Gefässhalter 21 hat einen in einem Stück hergestellten länglichen Körper 41, der eine einzige geradlinige Reihe von identischen, länglichen Kammern 51-1 bis 51-15 zur Aufnahme von je einem Gefäss 11 enthält. Alle diese Kammer haben einen gemeinsamen Boden 42, in Bezug auf den sie senkrecht angeordnet sind. Benachbarte Kammer, z.B. 51-1 und 51-2 sind voneinander durch eine Trennwand 43 getrennt.

Jede der Kammer 51-1 bis 51-15 hat eine sich von oberen Teil einer Trennwand 43 nach innen erstreckende Zunge 52, die als Feder zur genauen Positionierung eines Gefässes 11 in der Kammer dient. Die Zunge 52 hat eine Halterung 53, die in passenden Oeffnungen der Trennwand 43 einsteckbar ist.

Jede der Kammer 51-1 bis 51-15 trägt auf der Innenfläche einer Seitenwand 49 eine erste Strichkode-Etikette 44, die zur Erfassung des Fehlens eines Gefässes in der Kammer dient. Jede der Kammer 51-1 bis 51-15 trägt auf der Aussenfläche einer Seitenwand eine zweite Strichkode-Etikette 45, die zur Erfassung der Position der Kammer im Gefässhalter dient. Auf dem Gefässhalter, der dem Benutzer geliefert wird, sind die Strichkode-Etiketten 44 und 45 aller Kammer an den dafür vorgesehenen Flächen geklebt.

Der Gefässhalter 21 trägt ferner an einem ersten Ende eine Strichkode-Etikette 47, die auf der Aussenfläche einer Seitenwand angebracht ist, die an der ersten Kammer 51-1 des Gefässhalters angrenzt. Die Strichkode-Etikette 47 dient zur Erfassung der Nummer des Gefässhalters 21. Der Gefässhalter 21 hat an seinem entgegengesetzten Ende eine Fläche 59, die parallel zum Boden des Halters angeordnet ist, und die zur Aufnahme einer Etikette mit der Nummer des Halters in der Form einer Zahl dient. Diese Etikette sowie die Etikette 47 werden getrennt vom Gefässhalter geliefert und vom Benutzer angebracht.

Die erste Strichkode-Etikette 44 und die zweite Strichkode-Etikette 45 aller Kammer 51-1 bis 51-15 und die Strichkode-Etikette 47 werden bei der Einführung des Gefässhalters ins Analysengerät von der selben Seite des Gefässhalters mit dem Strichkode-Lesegerät 61 gelesen.

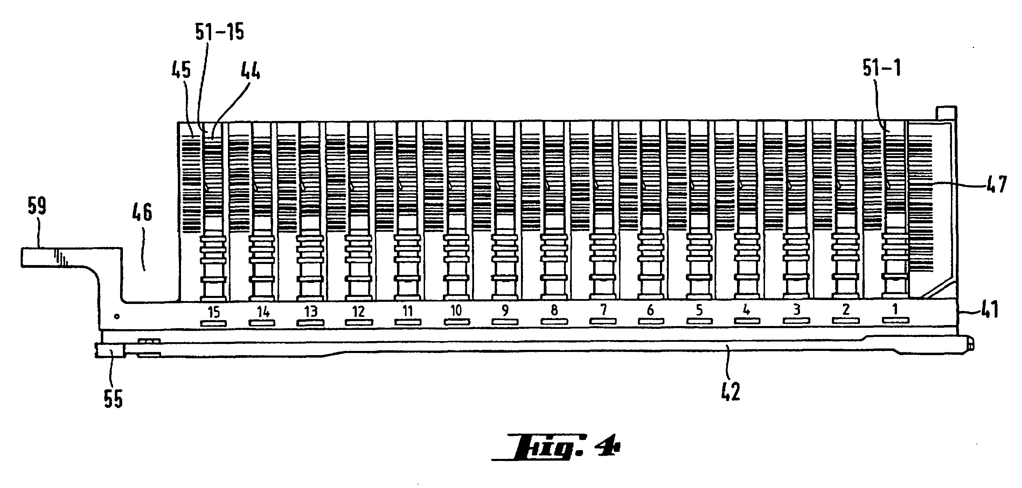

Fig. 4 zeigt eine Vorderansicht des Gefässhalters gemäss Fig. 3. Aus Fig. 4 sind alle Strichkode-Etiketten, 44, 45 und 47 auf dem Gefässhalter, sowie ein Fenster Ausschnitt) 46 ersichtlich, durch das der Lesestrahl des Strichkode-Lesegeräts 61 beim Lesevorgang verläuft.

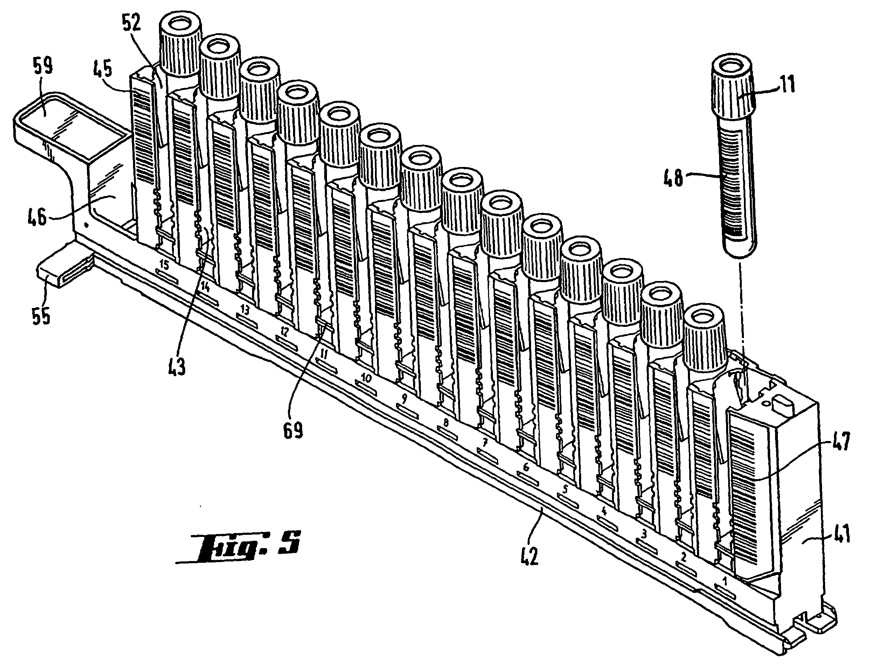

Fig. 5 zeigt einen Gefässhalter gemäss Fig. 3, bei dem die Kammer 51-1 bis 51-15 je ein Probengefäss 11 enthalten. Jedes Probengefäss ist auch mit einer Strichkode-Etikette 48 versehen. Jedes Probengefäss 11 wird in der Kammer des Gefässhalters so angeordnet, dass auch die auf ihm angebrachte Strichkode-Etikette mit dem Strichkode-Lesegerät 61 lesbar ist.

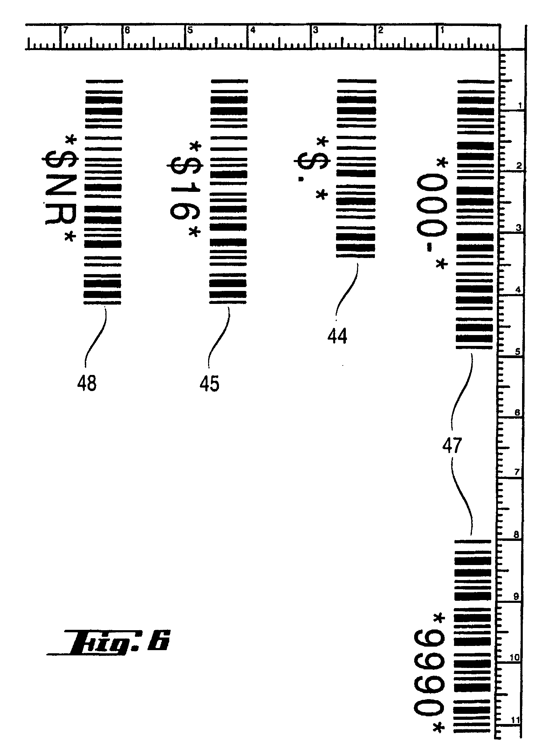

Fig. 6 zeigt Muster der Strichkode-Etiketten 44, 45, 47 und 48.

Die obige Beschreibung der Gefässhalter 21-26 für Probengefässe gilt im wesentlichen auch für die Gefässhalter 31-34 für Reagenzgefässe. Die Gefässhalter 31-34 unterscheiden sich von den Gefässhaltern 21-26 hauptsächlich durch die Anzahl Kammer pro Gefässhalter und durch die Abmessungen der Kammer.

Zur Vereinfachung der Darstellung werden in den nachstehend beschriebenen Figuren die Gefässhalter ohne die bei ihrer Benutzung im Analysengerät darin enthaltenen Gefässe dargestellt.

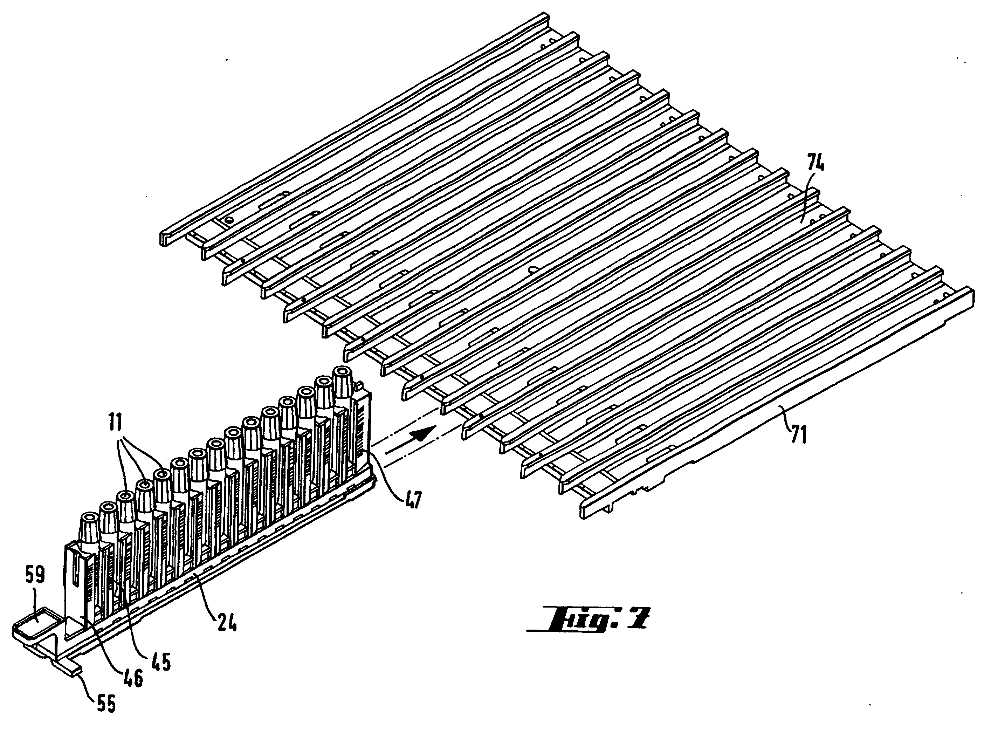

Im Analysengerät gemäss Fig. 1 werden die Gefässhalter in dazu passenden Bahnen einer in Fig. 1 nicht dargestellten Trägerplatte angeordnet. Wie in Fig. 7 angedeutet, wird jeder Gefässhalter 24 in eine freie Bahn 74 einer Trägerplatte 71 eingeschoben. Wie in der Explosionsansicht gemäss Fig. 8 dargestellt, befindet sich unter der Trägerplatte 71 eine Anordnung 81 von Induktivsensoren 82 und Hubmagneten 83, wobei pro Bahn ein Induktivsensor und ein Hubmagnet vorhanden ist. Wenn ein Gefässhalter 24 sich der Bahn 74 der Trägerplatte nähert, wird mit dem Induktivsensor 82 unterhalb der Bahn die Näherung eines Metallknopfs erfasst, der sich am Boden und in der Nähe der Spitze des Gefässhalters 24 befindet. Auf diese Weise wird die Position des Gefässhalters erfasst und damit ein entsprechendes elektrisches Signal erzeugt, das der Steuerschaltung 62 (in Fig. 1) zugeführt wird.

Mit den in Fig. 8 gezeigten Anordnung von Hubmagneten 83 und dazugehörigen Stiften 84 wird der Zugang zu jeder Bahn auf der Trägerplatte 71 für einen Gefässhalter selektiv geöffnet oder geschlossen. Der Zugang zu einer bestimmten Bahn ist in einem ersten Zustand des entsprechenden Hubmagnets 83 durch einen vom Hubmagnet bewegbaren Stift 84 gesperrt. Durch geeignete Steuerung des Hubmagnets kann dieser Stift 84 gezogen und dadurch den Zugang der Bahn für den Gefässhalter 24 geöffnet werden.

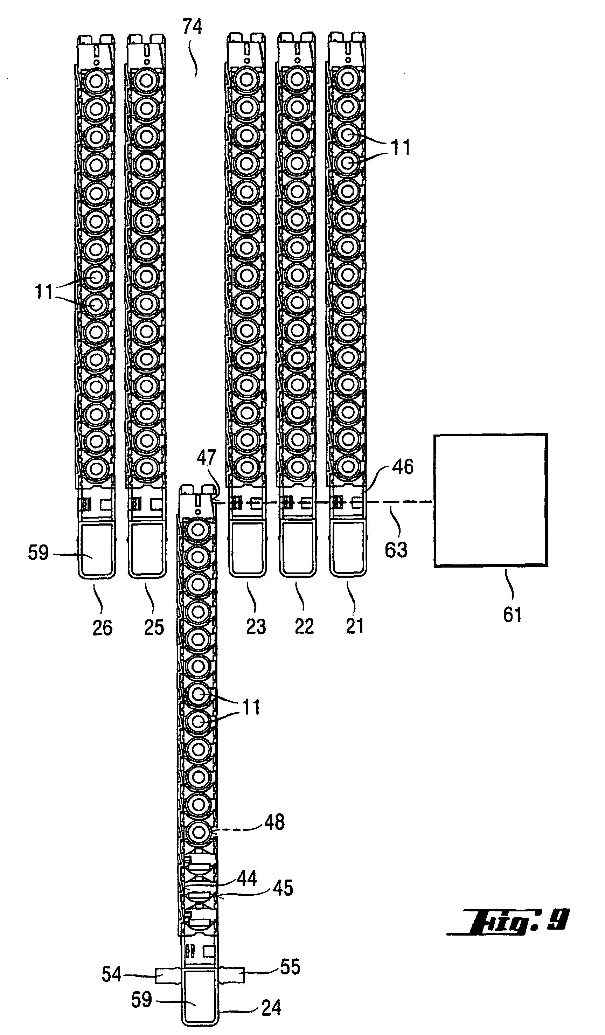

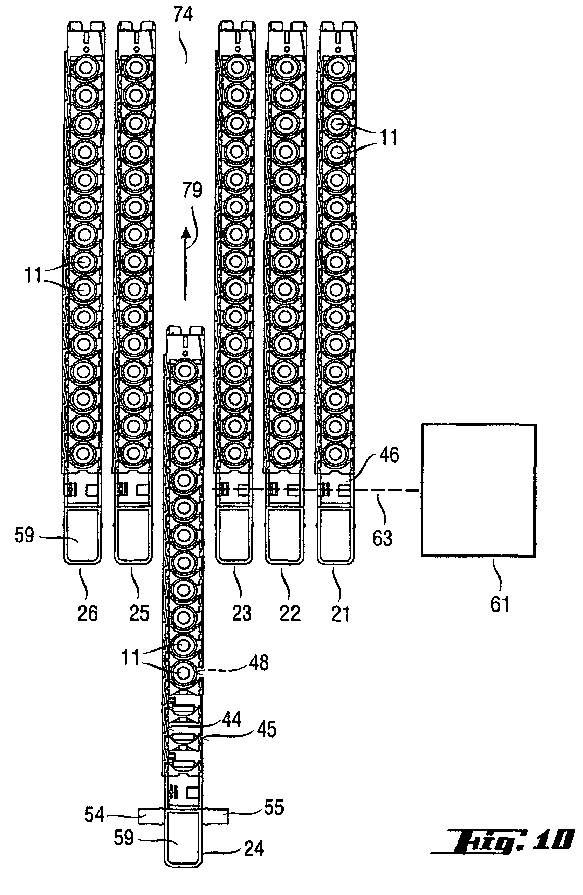

Die manuelle Einführung eines Gefässhalters 24 in einer freien Bahn 74 der Trägerplatte 71 gemäss Figuren 5 und 6 wird nachstehend anhand der Figuren 9 und 10 beschrieben.

Gemäss Fig. 9 befindet sich die freie Bahn 74 zwischen den Bahnen, die von Gefässhaltern 25 und 23 besetzt sind. Bei der Einführung des Gefässhalters 24 in der Bahn 74 stiess zunächst die Spitze des Gefässhalters 24 gegen den durch eine Oeffnung der Bahn 74 hervorragenden Stift 84 des Hubmagnets 83. Wenn dies eintritt, befindet sich der Gefässhalter 24 in der in Fig. 9 gezeigten Lage. In dieser Position wird die Strichkode-Etikette 47, welche die Identifikationsnummer des Gefässhalters 24 trägt, mit dem Strichkode-Lesegerät 61 gelesen. Dabei verläuft der Lichtstrahl 63 durch dem Fenster Ausschnitt 46 der Gefässhalter 21 bis 23. Nach der Durchführung dieses Lesevorgangs gibt das Strichkode-Lesegeräts 61 ein Steuersignal ab, das der Hubmagnet 83 aktiviert und dadurch den Stift 84 einzieht und somit die Einführung des Gefässhalters 24 in die Bahn 74 erlaubt.

Die Bewegung des Gefässhalters 24 während seiner manuellen Einführung in die Bahn 74 wird in Fig. 10 mit dem Pfeil 79 angedeutet. Während dieser Bewegung werden die Strichkode-Etiketten 45 aller Kammer 51-1 bis 51-15 sowie die Strichkode-Etiketten 48 der in diesen Kammer enthaltenen Probegefässe mit dem Strichkode-Lesegerät 61 gelesen. Wenn eine Kammer kein Probegefäss enthält wird die Strichkode-Etikette 44 der Kammer gelesen, die der leeren Zustand der Kammer angibt. Wenn alle Strichkode-Etiketten korrekt gelesen worden sind, gibt der Strichkode-Lesegerät 61 ein Steuersignal ab, das eine entsprechende Information an die Zentralsteuerung des Analysengeräts mitteilt. Konnte hingegen eine der Strichkode-Etiketten nicht korrekt gelesen werden, bleibt eine solche Mitteilung aus und der Benutzer wird durch eine geeignete Signalisierung aufgefordert, dass Gefässhalter 24 nochmals einzuführen, damit der Lesevorgang wiederholt werden kann.

Wenn Gefässhalter 24 seine vorbestimmte Position in der Bahn 74 eingenommen hat, wird dies mit der Induktivsensor 82 erfasst, der einen zweiten Metallknopf an einem Ende des Bodens des Gefässhalters 24 fühlt. Diese Erfassung bewirkt eine Verriegelung der Bahn 74 mittels des entsprechenden Hubmagnetes 83 und den dazugehörigen Stift 84, so dass der Gefässhalter 24 in dieser Bahn festgehalten wird, bis die Bahn 74 durch ein entsprechendes Steuersignal entriegelt wird, das am Ende der Bearbeitung der Proben im Gefässhalter 24 von der Zentralsteuerung des Analysengerätes erzeugt wird.

Die Abtastfrequenz des Strichkode-Lesegeräts wird so hoch gewählt, dass sie ein korrektes Lesen aller Strichkode-Etiketten auf einem Gefasshalter während dessen manuellen Einführung in das Analysengerät ermöglicht.

Die obige Beschreibung der Einführung des Gefässhalters 24 in einer entsprechenden Bahn der Trägerplatte 71 und des Lesens der Strichkode-Etiketten mit dem Strichkode-Lesegerät 61 gilt auch in Bezug auf die übrigen Gefässhalter und Gefässe im Analysengerät gemäss Fig.1.

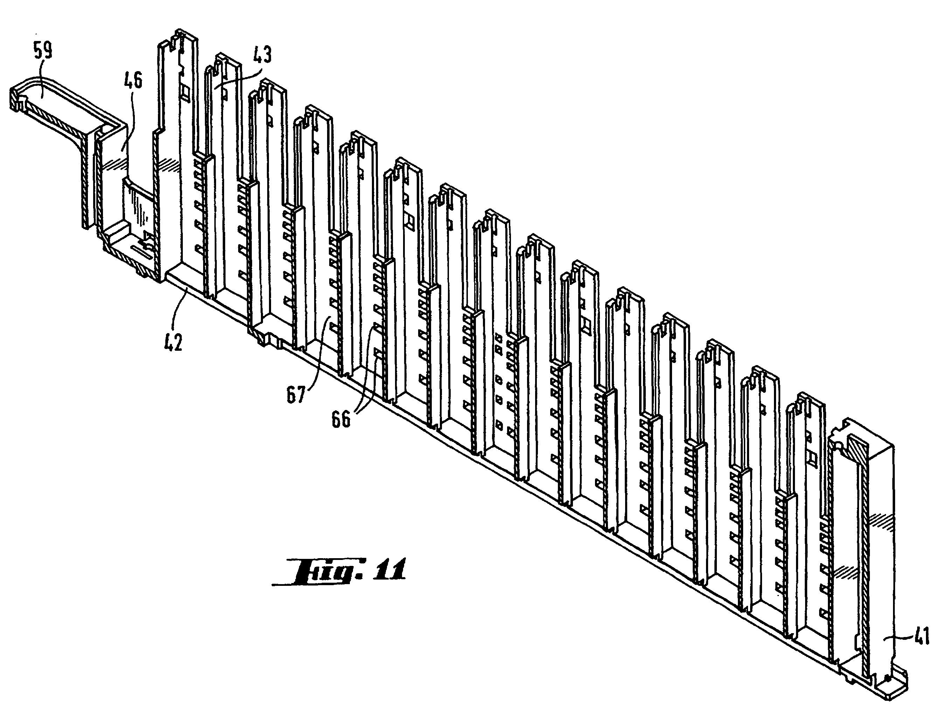

Weitere Einzelheiten des Gefässhalters gemäss Fig. 3 sind nachstehend anhand der Figuren 11-16 gezeigt.

Aus der Schnittansicht gemäss Fig. 11 sind insbesondere der gemeinsame Boden 42 der Kammer 51-1 bis 51-15 und die Trennwände zwischen benachbarten Kammern dargestellt.

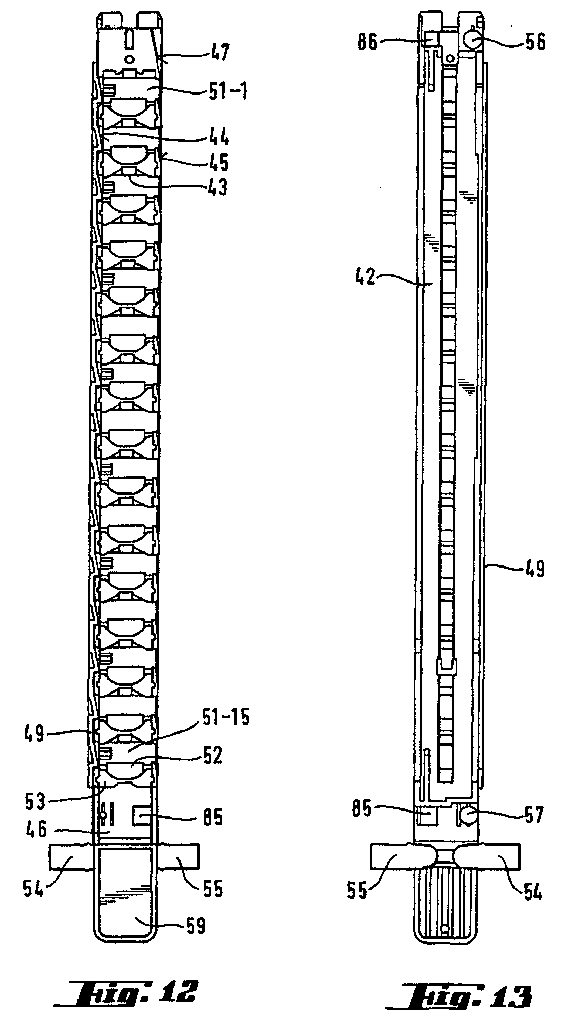

Fig. 12 zeigt eine Draufsicht des Gefässhalters gemäss Fig. 3. Es ist aus Fig. 11 ersichtlich, dass die Innenfläche, welche die erste Strichkode-Etikette 44 trägt, und die Aussenfläche, welche die zweite Strichkode-Etikette 45 trägt, in Bezug auf eine Ebene, die durch die Längsachse des Gefässhalters und die Längsachse einer der Kammer definiert ist, gleich angeordnet sind. In einer bevorzugten Ausführungsform des Gefässhalters sind die soeben erwähnten Innenfläche bzw. Aussenfläche parallel zu einander und bilden ein Winkel von ca. 10 Grad mit der Ebene, die durch die Längsachse des Halters und die Längsachse einer der Kammer definiert ist.

In einer bevorzugten Ausführungsform des Gefässhalters ist ferner die Innenfläche, welche die erste Strichkode-Etikette 44 trägt, ein Teil der Innenfläche einer gemeinsamen Seitenwand 49 aller Kammer 51-1 bis 51-15, wobei die Seitenwand 49 mit dem Körper des Halters trennbar verbunden ist.

Fig. 13 zeigt eine Unteransicht des Gefässhalters gemäss Fig. 3.

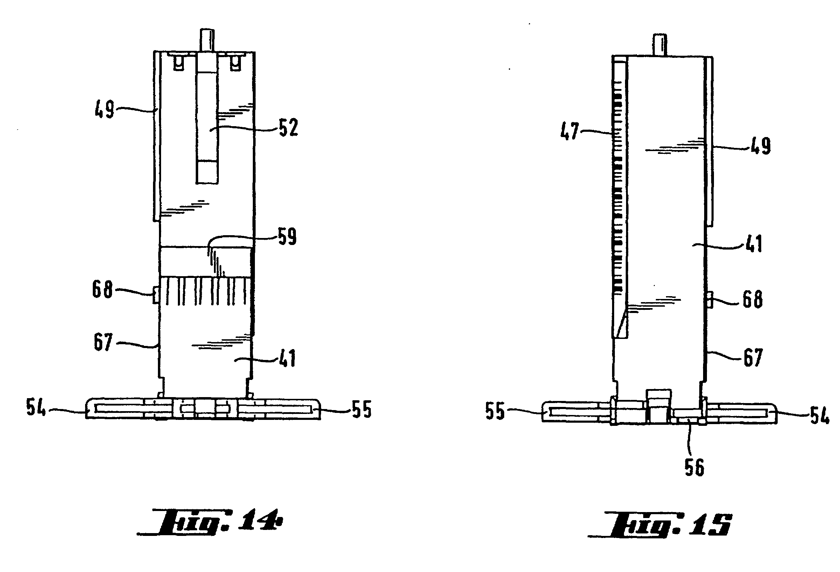

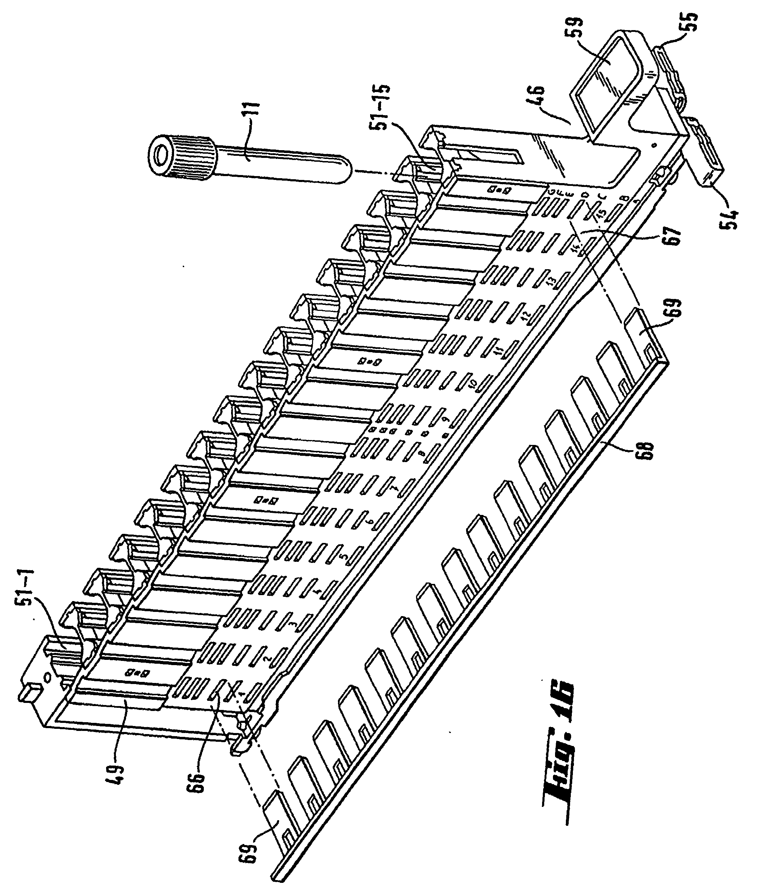

Fig. 14 zeigt eine Seitenansicht von links und Fig. 15 zeigt eine Seitenansicht von rechts des Gefässhalters gemäss Fig. 3.

Wie aus Figuren 12 bis 14 ersichtlich, hat der Gefässhalter gemäss Fig. 3 an einem Ende flache Stützen 54 und 55, deren untere Aussenfläche mit der unteren Aussenfläche des Bodens 42 des Gefässhalters koplanar sind. Jede der Stützen 54 und 55 wird durch eine Torsionfeder in seitlicher Lage gehalten. Bei der Einführung des Gefässhalters ins Analysengerät werden die Stützen 54 und 55 gegen die Kraft der Torsionfeder geklappt und nehmen eine zur Längsachse des Gefässhalters parallele Lage ein. Die Stützen 54 und 55 geben dem Gefässhalter eine erhöhte Stabilität gegen Umkippen, wenn der Gefässhalter vor seiner Einführung ins Analysengerät z.B. auf einem Tisch gelegt wird.

Wie in Figur 13 dargestellt, sind am Boden 42 einer bevorzugten Ausführungsform des Gefässhalters gemäss Fig. 3 Metallköpfe 56 und 57 befestigt, die mittels eines induktiven Sensors erfassbar sind.

Wie in Figur 13 dargestellt, sind am Boden 42 einer bevorzugten Ausführungsform des Gefässhalters gemäss Fig. 3 Oeffnungen 85 bzw. 86 vorhanden, die ein Festhalten des Gefässhalters auf der Trägerplatte 71 ermöglichen.

Fig. 16 zeigt eine perspektivische Rückansicht des Gefässhalters gemäss Fig. 3.

Wie in Figur 16 dargestellt, hat eine aller Kammer 51-1 bis 51-15 gemeinsame Seitenwand 67 waagerechte Reihen von schlitzförmigen Oeffnungen 66 in verschiedenen senkrechten Lagen in Bezug auf dem Boden des Halters. Flache von einer Leiste 68 kammartig getragene Zwischenboden 69 können durch diese schlitzförmigen Oeffnungen eingeschoben werden. Dies ermöglicht, die Tiefe der Kammer 51-1 bis 51-15 der Länge der verwendeten Gefässe 11 anzupassen. In einer bevorzugten Ausführungsform wird die Spitze jedes Zwischenbodens 69 in einer entsprechenden Oeffnung 76 der Seitenwand der Kammer angeordnet, die gegenüber der Seitenwand 67 liegt.

Im Rahmen der Erfindung kann jede der erwähnten Strichkode-Etiketten durch ein Aequivalent, z.B. durch einen entsprechenden Aufdruck auf eine Fläche des Gefässhalters, ersetzt werden.

## Patentansprüche

1. Analysengerät zur automatischen Durchführung von Analysen, bei dem die zu analysierenden flüssige Proben und die erforderlichen Reagenzien in entsprechenden Gefässen (11, 12) gehalten werden,
**dadurch gekennzeichnet, dass** es folgende Komponenten enthält:
a) wenigstens zwei Gefässhalter (21-26), die im Analysengerät parallel zueinander angeordnet werden, wobei in jedem Gefässhalter eine Vielzahl von Gefässen (11) der gleichen Art (z.B. Proben enthaltenden Gefässe) angeordnet werden, wobei jeder Gefässhalter einen in einem Stück hergestellten länglichen Körper (41) hat, der eine einzige geradlinige Reihe von identischen, länglichen Kammern (51-1 bis 51-15) zur Aufnahme von je einem Gefäss (11) enthält, wobei alle Kammer (51-1 bis 51-15) einen gemeinsamen Boden (42) haben, in Bezug auf den sie senkrecht angeordnet sind, wobei benachbarte Kammer voneinander durch eine Trennwand (43) getrennt sind, wobei jede Kammer auf der Innenfläche einer Seitenwand eine erste Strichkode-Etikette (44) trägt, die zur Erfassung des Fehlens eines Gefässes (11) in der Kammer dient, wobei jede Kammer auf der Aussenfläche einer Seitenwand, eine zweite Strichkode-Etikette (45) trägt, die zur Erfassung der Position der Kammer im Gefässhalter dient, und wobei die erste und die zweite Strichkode-Etiketten (44, 45) von der selben Seite des Gefässhalters mit einem Strichkode-Lesegerät lesbar sind,
b) einen im Analysengerät fest angeordneten Strichkode-Lesegerät (61), das zum Lesen aller Strichkode-Etiketten auf jedem der Gefässhalter verwendet wird, und
c) Mittel (62) zur automatischen Einstellung des Fokussierbereichs des Strichkode-Lesegeräts (61) in Funktion des Abstands zwischen dem Gefässhalter und dem Strichkode-Lesegerät.

2. Analysengerät gemäss Anspruch 1, **dadurch gekennzeichnet, dass** die Mittel (62) zur automatischen Einstellung des Fokussierbereichs des Strichkode-Lesegeräts (61) Mittel zur Erfassung der Position eines Gefässhalter im Analysengerät enthalten.

3. Analysengerät gemäss Anspruch 1, **dadurch gekennzeichnet, dass** die Abtastfrequenz des Strichkode-Lesegeräts (61) so hoch gewählt wird, dass sie ein korrektes Lesen aller Strichkode-Etiketten (44, 45, 47) auf einem Gefässhalter während dessen manuellen Einführung in das Analysengerät ermöglicht.

4. Analysengerät gemäss Anspruch 1, **dadurch gekennzeichnet, dass** das Strichkode-Lesegerät (61) dazu eingerichtet ist, jede Strichkode-Etikette auf einem ersten Gefässhalter (24) mit einem Lichtstrahl (63) abzutasten, der durch ein Fenster (46) im Körper (41) eines zweiten Gefässhalters (21, 22, 23) verläuft, der zwischen dem ersten Gefässhalter und dem Strichkode-Lesegerät (61) angeordnet ist.

5. Analysengerät gemäss Anspruch 1, **dadurch gekennzeichnet, dass** es Mittel (83, 84) zum Festhalten der Gefässhalter im Analysengerät während deren Bearbeitung enthält.

## Claims

1. Analyser for automatically carrying out analyses in which the liquid samples to be analysed and the required reagents are held in appropriate vessels (11, 12), **characterized in that** it contains the following components:
a) at least two vessel holders (21-26) which are arranged in the analyser parallel to one another where each vessel holder contains an arrangement of a plurality of vessels (11) of the same type (e.g. vessels containing samples) and each vessel holder has an elongate body (41) made in one piece which contains a single straight row of identical elongate chambers (51-1 to 51-15) each of which can hold one vessel (11), where all chambers (51-1 to 51-15) have a common base (42) and are arranged perpendicular to the said base, and neighbouring chambers are separated from one another by a partition wall (43), and each chamber bears a first barcode label (44) on the inner surface of a side wall which is used to detect the absence of a vessel (11) in the chamber, and each chamber carries a second barcode label (45) on the outer surface of a side wall which is used to detect the position of the chamber in the vessel holder and the first and the second barcode labels (44, 45) can be read by a barcode reader from the same side of the vessel holder,
b) a barcode reader (61) which is in a fixed position in the analyser and is used to read all barcode labels on each of the vessel holders, and
c) means (62) for automatically adjusting the focussing range of the barcode reader as a function of the distance between the vessel holder and the barcode reader.

2. Analyser as claimed in claim 1, **characterized in that** the means (62) for automatically adjusting the focussing range of the barcode reader (61) comprises means for detecting the position of a vessel holder in the analyser.

3. Analyser as claimed in claim 1, **characterized in that** the scanning frequency of the barcode reader (61) is selected to be high enough to enable a correct reading of all barcode labels (44, 45, 47) on a vessel holder while it is manually inserted into the analyser.

4. Analyser as claimed in claim 1, **characterized in that** the barcode reader (61) is equipped to scan any barcode label on a first vessel holder (24) with a light beam (63) which passes through a window (46) in the body (41) of a second vessel holder (21, 22, 23) which is arranged between the first vessel holder and the barcode reader (61).

5. Analyser as claimed in claim 1, **characterized in that** it contains means (83, 84) to hold the vessel holders in the analyser during their processing.

## Revendications

1. Analyseur pour la réalisation automatique d'analyses, dans lequel les échantillons liquides à analyser et les réactifs nécessaires sont contenus dans des récipients (11, 12) respectifs, **caractérisé en ce qu'**il comprend les composants suivants :
a) au moins deux supports de récipients (21-26) qui sont disposés parallèlement l'un à l'autre dans l'analyseur, dans chaque support de récipients une pluralité de récipients (11) du même type (par exemple des récipients contenant des échantillons) étant disposée, chaque support de récipients présentant un corps oblong (41) réalisé en une seule pièce, qui comprend une seule rangée droite de compartiments oblongs (51-1 à 51-15) identiques pour recevoir respectivement un récipient (11), l'ensemble des compartiments (51-1 à 51-15) présentant un fond commun (42) par rapport auquel ils sont disposés verticalement, des compartiments voisins étant séparés l'un de l'autre par une paroi de séparation (43), chaque compartiment portant sur la surface intérieure d'une paroi latérale une première étiquette de code à barres (44), qui sert à détecter l'absence d'un récipient (11) dans le compartiment, chaque compartiment portant sur la surface extérieure d'une paroi latérale une deuxième étiquette de code à barres (45), qui sert à détecter la position du compartiment dans le support de récipients, et la première et la deuxième étiquettes de code à barres (44, 45) pouvant être lues depuis le même côté du support de récipients à l'aide d'un lecteur de code à barres,
b) un lecteur de code à barres (61) intégré dans l'analyseur, utilisé pour la lecture de toutes les étiquettes de code à barres sur chacun des supports de récipients, et
c) des moyens (62) pour le réglage automatique de la plage de focalisation du lecteur de code à barres (61) en fonction de la distance entre le support de récipients et le lecteur de code à barres.

2. Analyseur selon la revendication 1, **caractérisé en ce que** les moyens (62) pour le réglage automatique de la plage de focalisation du lecteur de code à barres (61) comprennent des moyens de détection de la position d'un support de récipient dans l'analyseur.

3. Analyseur selon la revendication 1, **caractérisé en ce que** la fréquence de balayage du lecteur de code à barres (61) est choisie de telle sorte qu'elle permet une lecture correcte de toutes les étiquettes de code à barres (44, 45, 47) sur un support de récipients pendant l'introduction manuelle de celui-ci dans l'appareil d'analyse.

4. Analyseur selon la revendication 1, **caractérisé en ce que** le lecteur de code à barres (61) est prévu pour balayer chaque étiquette de code à barres sur un premier support de récipients (24) à l'aide d'un rayon lumineux (63), qui s'étend par une fenêtre (46) dans le corps(41) d'un deuxième support de récipients disposé entre le premier support de récipients et le lecteur de code à barres (61).

5. Analyseur selon la revendication 1, **caractérisé en ce qu'**il comprend des moyens (83, 84) pour maintenir les supports de récipients dans l'analyseur pendant le traitement de ceux-ci.
